# EUROPÄISCHE PATENTSCHRIFT

(11) **EP 1 780 075 B1**
(45) Veröffentlichungstag und Bekanntmachung des Hinweises auf die Patenterteilung: **05.03.2008**
(21) Anmeldenummer: 06018279.7
(22) Anmeldetag: 01.09.2006
(51) Int. Cl.: B60N 2/48

(54) **Crashaktive Kopfstütze**
Crash-active headrest
Appui-tête actif lors d'un choc

(30) Priorität: 27.10.2005 DE 102005051423
(43) Veröffentlichungstag der Anmeldung: 02.05.2007
(73) Patentinhaber: KEIPER GmbH & Co. KG, 67657 Kaiserslautern (DE)
(72) Erfinder: Heeg, Norbert, 66994 Dahn (DE); Diehl, Andreas, Dr., 67731 Otterbach (DE)
(74) Vertreter: Patentanwälte Hosenthien-Held und Dr. Held

(56) Entgegenhaltungen:
- WO-A-20/04108472
- WO-A-20/05087536
- DE-B3-5102004 023 39

## Beschreibung

Die Erfindung betrifft eine Kopfstütze mit den Merkmalen des Oberbegriffs des Anspruches 1.

Aus der US 2005/0127726 A1 ist eine Kopfstütze dieser Art bekannt, deren Elektromagnet von einem außerhalb der Kopfstütze, insbesondere neben dem Fahrzeugsitz, angeordneten Steuergerät angesteuert und bestromt wird. Die im Steuergerät enthaltene Leistungsstufe ist auf den Energiebedarf des Elektromagneten abgestimmt.

Der Erfindung liegt die Aufgabe zu Grunde, eine Kopfstütze der eingangs genannten Art zu verbessern. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Dadurch, dass innerhalb der Kopfstütze eine Aktuatorbox als internes Steuergerät angeordnet ist, welche die Bauteile zum Bestromen des Elektromagneten oder Elektromotors umfasst und welche mit einem außerhalb der Kopfstütze angeordneten Steuergerät zum Ansteuern verbunden ist, kann das externe Steuergerät ein konventionelles Steuergerät sein, wie es auch zur Auslösung eines Airbags verwendet wird, während sämtliche speziellen Bauteile und Schaltungen für die Kopfstütze, insbesondere zur Energiebeschaffung und-steuerung für den Elektromagneten oder -motor, innerhalb der Kopfstütze angeordnet sind. Dies spart nicht nur Bauraum, sondern erhöht aufgrund einer universelleren Schnittstelle der Kopfstütze deren Einsatzmöglichkeiten, d.h. es sind geringere Anpassungen an spezielle Kraftfahrzeuge und Fahrzeugsitze erforderlich.

Ein verbesserter modularer Aufbau der Kopfstütze wird erreicht, wenn die Aktuatorbox als mechanisches und elektrisches Steuergerät vorgesehen ist, welche auch den Elektromagneten oder -motor und die weiteren Bauteile zum Halten des Antriebs umfasst, d.h. alle zum Halten und Ansteuern erforderlichen Bauteile enthält. Entsprechend ist die Aktuatorbox vorzugsweise mit einem nahezu geschlossenen Gehäuse versehen, innerhalb dessen die besagten Bauteile angeordnet sind, und mit dem sie am Träger angebracht sein kann. Die Aktuatorbox bildet dabei vorzugsweise eine (mechanisch und elektrisch) prüffähige Einheit.

In elektrischer Hinsicht zählt zu diesen in der Aktuatorbox enthaltenen Bauteilen vorzugsweise eine Leistungsstufe, d.h. beispielsweise ein mit dem Elektromagneten in Serie liegenden Leistungstransistor zum Bestromen des Elektromagneten oder -motors, welcher als ansteuerbarer Schalter zum Einschalten und Abschalten des Stromes für den Elektromagneten oder -motor dient. Anstelle des Leistungstransistors kann auch eine andere Leistungsschaltung oder ein Relais vorgesehen sein, so dass im folgenden bei der Erwähnung des Leistungstransistors diese Varianten mitzulesen sind.

Zur Sicherheit und zur Kontrolle können eine Schutzschaltung für den Leistungstransistor und/oder wenigstens ein Diagnosemodul für den Leistungstransistor vorgesehen sein, ebenso wie eine Freilaufdiode parallel zum Elektromagneten - oder motor vorgesehen sein kann. Die Bauteile, insbesondere der Leistungstransistor und der Elektromagnet, können miteinander zu einem einstückigen Bauteil verbunden sein, beispielsweise gemeinsam umspritzt oder eingegossen sein.

Zur elektrischen Anbindung der Kopfstütze sind vorzugsweise wenigstens eine Steuerleitung, die vorzugsweise der Ansteuerung des Leistungstransistors dient, und zwei Versorgungsleitungen, welche den Strom zum Bestromen des Elektromagneten oder -motors liefern, in der Kopfstütze geführt, wo sie insbesondere an die Aktuatorbox angeschlossen sind. Die Steuerleitung überträgt - bei in der Regel gleicher Spannung - eine gegenüber der Leistung über die Versorgungsleitungen geringere Leistung, welche durch einen zur Ansteuerung eines Airbags verwendbaren Ausgang des außerhalb der Kopfstütze angeordneten Steuergerätes bereitgestellt wird, an welches die Steuerleitung vorzugsweise angeschlossen ist. Es ist theoretisch denkbar, das Ansteuern der Aktuatorbox nicht über die Steuerleitung vorzunehmen, sondern die Versorgungsspannung mit einem Steuersignal zu modulieren, um eine Leitung einzusparen. Dem steht allerdings der erhöhte elektronische Aufwand entgegen.

In mechanischer Hinsicht zählt zu den in der Aktuatorbox enthaltenen Bauteilen zum Halten des Antriebs vorzugsweise eine bewegliche Klinke, welche von einem Permanentmagneten in einer bestimmten Position gehalten wird, dessen Magnetfeld demjenigen des bestromten Elektromagneten entgegengesetzt ist. Eine solche Klinke hält vorzugsweise eine Feder als Antrieb, und zwar bei unbestromtem Elektromagneten, und gibt die Feder bei Bestromen des Elektromagneten frei.

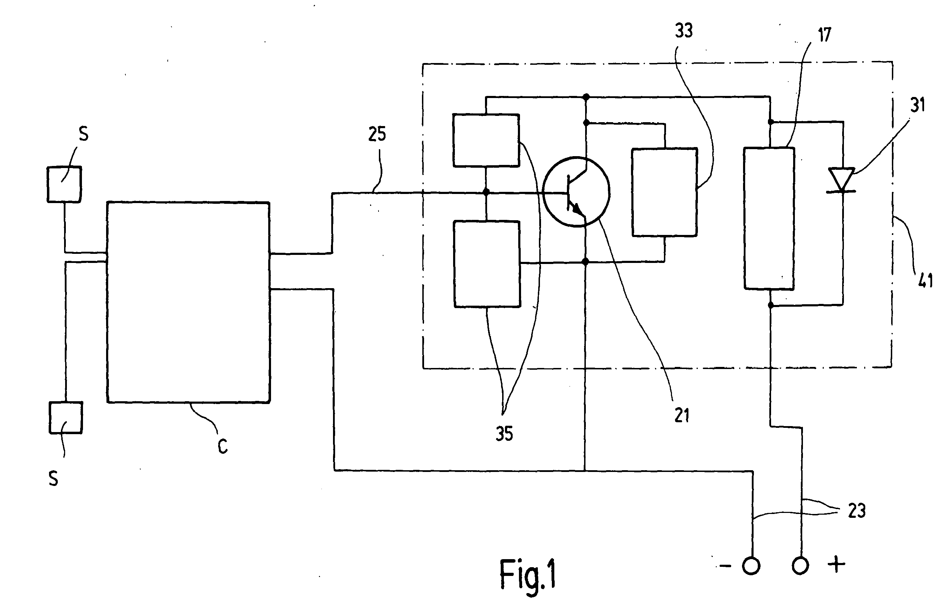

Im folgenden ist die Erfindung anhand eines in der Zeichnung dargestellten Ausführungsbeispiels näher erläutert. Es zeigen
- Fig. 1: ein Blockschaltbild der elektronischen Bauteile des Ausführungsbeispiels,

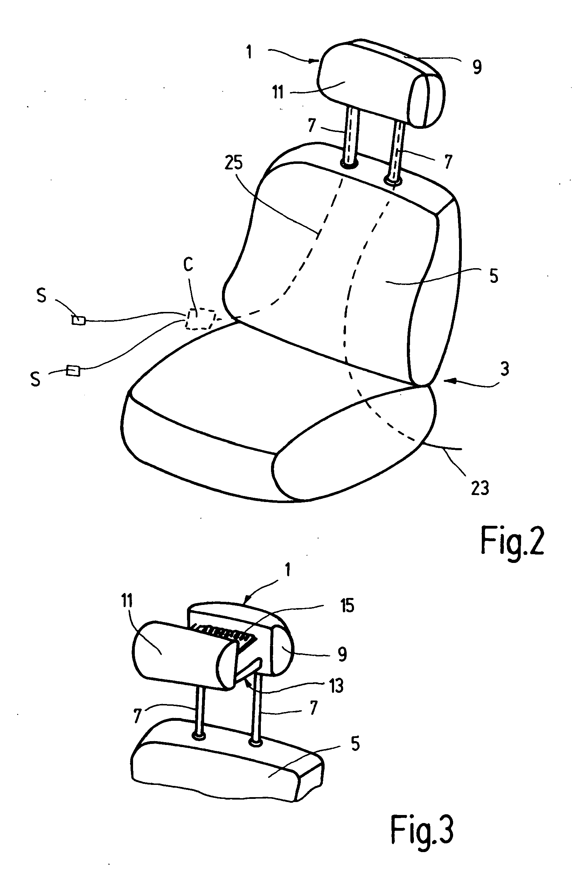

- Fig. 2: eine perspektivische Darstellung des Ausführungsbeispiels samt Fahrzeugsitz vor dem Crashfall, und
- Fig. 3: eine perspektivische Darstellung des Ausführungsbeispiels nach dem Crashfall.

Eine Kopfstütze 1 für einen Fahrzeugsitz 3 eines Kraftfahrzeuges ist an der Lehne 5 des Fahrzeugsitzes 3 mittels wenigstens einer, vorzugsweise zwei Kopfstützenstangen 7 angebracht. Die crashaktive Kopfstütze 1 weist einen Träger 9, welcher auf den Kopfstützenstangen 7 angeordnet und angebracht ist, und ein Prallelement 11 auf, welches vor dem Träger 9 angeordnet und mittels eines Viergelenks 13 an diesem angebracht ist. Die Kinematik der Kopfstütze 1 ist ausführlich in der US 2005/0127726 A1 beschrieben, deren Offenbarungsgehalt hiermit ausdrücklich einbezogen wird. Im Normalfall ist das Prallelement 11 auf der Vorderseite des Trägers 9 angeordnet und liegt an diesem an. Das Viergelenk 13 ist zusammengeklappt. Der Träger 9 und das Prallelement 11 sind auf den voneinander abgewandten Seiten gepolstert und/oder verblendet, so dass sich zusammen eine weitgehend geschlossene Form der Kopfstütze 1 ergibt.

Innerhalb des Kraftfahrzeuges, in der Regel außerhalb des Fahrzeugsitzes 1, ist wenigstens ein Crashsensor, kurz als Sensor S bezeichnet, angeordnet, wobei vorzugsweise mehrere Sensoren S vorgesehen sind. Die Sensoren S sind an ein zentrales, bezüglich der Kopfstütze 1 externes Steuergerät C des Kraftfahrzeuges angeschlossen. Das herkömmlich ausgebildete Steuergerät C, welches auch die Airbags steuert, hat beispielsweise eine Ausgangsspannung von 12 V und eine maximale Stromstärke von 1,2 A. Innerhalb der Kopfstütze 1 ist ein Antrieb 15 für das Viergelenk 13 vorgesehen, vorzugsweise eine Feder, vorliegend eine Doppel-Schenkelfeder, welche im Normalfall mittels einer Klinke von einem Haftmagneten gehalten wird, wie er in der DE 102 15 054 A1 beschrieben ist, deren Offenbarungsgehalt hiermit ausdrücklich einbezogen wird. Der Haftmagnet besteht aus einem Permanentmagneten, welcher im Normalfall den Antrieb 15, d.h. die Feder, für das Viergelenk 13 mittelbar hält, und einem Elektromagneten 17, welcher im Normalfall unbestromt ist, im Crashfall aber dazu bestimmt ist, ein Gegenfeld zum Magnetfeld des Permanentmagneten aufzubauen und die gesamte Haltekraft so weit zu verringern, dass der Antrieb 15 freigegeben wird. Anstelle des Haftmagneten kann auch ein den Antrieb 15 freigebender Elektromotor vorgesehen sein.

Der Elektromagnet 17, d.h. die Spule desselben, liegt in Serie mit einem Leistungstransistor 21, beispielsweise einem npn-Transistor, indem der Elektromagnet 17 einerseits am Pluspol + des Bordnetzes (in der Regel 12 V oder 24 V) und andererseits am Kollektor des Leistungstransistors 21 angeschlossen ist, während der Emitter des Leistungstransistors 21 am Minuspol - des Bordnetzes angeschlossen ist. Die beiden notwendigen Versorgungsleitungen 23 zwischen dem Elektromagnet 17 und dem Leistungstransistor 21 in der Kopfstütze 1 einerseits und dem übrigen, über den Fahrzeugsitz 3 zu erreichenden Bordnetz andererseits sind durch die beispielsweise hohlen Kopfstützenstangen 7 geführt. Die Basis des Leistungstransistors 21 ist an das Steuergerät C des Kraftfahrzeuges angeschlossen, und zwar an einen zur Ansteuerung eines Airbags verwendbaren Ausgang des Steuergerätes C. Hierfür ist eine dritte Leitung, d.h. eine Steuerleitung 25, von der Kopfstütze 1 zum Fahrzeugsitz 3 geführt, vorzugsweise ebenfalls durch die Kopfstützenstange. Mittels der Steuerleitung 25 wird maximal die Ausgangsleistung des Steuergerätes C übertragen, d.h. eine gegenüber der Leistung über die Versorgungsleitungen deutlich geringere Leistung.

In an sich bekannter Weise sind mit dem Elektromagneten 17 und dem Leistungstransistor 21 weitere elektronische Bauelemente verschaltet. Vorzugsweise ist parallel zum Elektromagneten 17 eine Freilaufdiode 31 angeschlossen, welche beim Abschalten des Elektromagneten 17 den Strom aus dem zusammenbrechenden Magnetfeld kurzschließt. Parallel zum Leistungstransistor 21, d.h. zwischen Emitter und Kollektor, ist eine Schutzschaltung 33 angeschlossen, beispielsweise eine Verpolschutzdiode. Zwischen Kollektor und Basis und Emitter und Basis sind vorzugsweise Diagnosemodule 35 angeschlossen, die beispielsweise die Funktionsfähigkeit des Elektromagneten 17 und der Kontaktierungen prüfen.

Der Haftmagnet samt Elektromagnet 17, die Klinke zum Halten der Feder, der Leistungstransistor 21 und die vorstehend beschriebenen elektronischen Bauelemente, also die zum Halten und Auslösen des Antriebs 15 verwendeten mechanischen und elektrischen Bauteile, sind baulich zu einer Aktuatorbox 41 zusammengefasst, welche vorzugsweise mit einem nahezu geschlossenen Gehäuse versehen und am Träger 9 angebracht ist. Die Aktuatorbox 41 ist damit sowohl das mechanische als auch das elektrische Steuergerät zum Ansteuern des Antriebs 15 und damit zum Auslösen der crashaktiven Kopfstütze 1. Als internes Steuergerät ist die Aktuatorbox 41 vollständig innerhalb der Kopfstütze 1 angeordnet, wobei die beiden Versorgungsleitungen 23 und die Steuerleitung 25 an die Aktuatorbox 41 angeschlossen sind. Bei der Herstellung bildet daher die Aktuatorbox 41 eine prüffähige Einheit.

Tritt der Crashfall ein und melden die Sensoren S dies an das Steuergerät C, so gibt dieses ein Signal über die Steuerleitung 25 an die Aktuatorbox 41 ab, in welcher der Leistungstransistor 21 durchschaltet. Über die Versorgungsleitungen 23 wird nun der Elektromagnet 17 bestromt, der in der bereits erwähnten Weise den Antrieb des Viergelenks 13 auslöst, welches das Prallelement 11 von seiner Ausgangsposition nach vorne in eine Crashposition ausfährt. Der Kopf des Insassens wird dann vom Prallelement 11 frühzeitig abgefangen. Nach Beendigung des Signals sperrt der Leistungstransistor 21 wieder, worauf der Strom im Elektromagneten 17 über die Freilaufdiode 31 abklingt.

### Bezugszeichenliste

- 1: Kopfstütze
- 3: Fahrzeugsitz
- 5: Lehne
- 7: Kopfstützenstange
- 9: Träger
- 11: Prallelement
- 13: Viergelenk
- 15: Antrieb
- 17: Elektromagnet
- 21: Leistungstransistor
- 23: Versorgungsleitung
- 25: Steuerleitung
- 31: Freilaufdiode
- 33: Schutzschaltung
- 35: Diagnosemodul
- 41: Aktuatorbox
- C: Steuergerät
- S: Sensor
- +: Pluspol (des Bordnetzes)
- -: Minuspol (des Bordnetzes)

## Patentansprüche

1. Kopfstütze für einen Fahrzeugsitz, insbesondere einen Kraftfahrzeugsitz, mit einem Träger (9), einem im Crashfall relativ zum Träger (9) ausfahrbaren Prallelement (11), einem Antrieb (15) für das Ausfahren des Prallelementes (11) und Bauteilen zum Halten und Auslösen des Antriebs (15), welche einen von einem Steuergerät ansteuerbaren und bestrombaren Elektromagneten (17) oder Elektromotor umfassen, **dadurch gekennzeichnet, dass** innerhalb der Kopfstütze (1) eine Aktuatorbox (41) als internes Steuergerät angeordnet ist, welche die Bauteile zum Bestromen des Elektromagneten (17) oder -motors umfasst und welche mit einem außerhalb der Kopfstütze (1) angeordneten externen Steuergerät (C) zum Ansteuern verbunden ist.

2. Kopfstütze nach Anspruch 1, **dadurch gekennzeichnet, dass** die Aktuatorbox (41) als mechanisches und elektrisches Steuergerät vorgesehen ist, welche auch den Elektromagneten (17) oder -motor und die weiteren Bauteile zum Halten und Auslösen des Antriebs (15) umfasst.

3. Kopfstütze nach Anspruch 1 oder 2, **dadurch gekennzeichnet, dass** die Aktuatorbox (41) einen mit dem Elektromagneten (17) oder -motor in Serie liegenden Leistungstransistor (21) oder andere Leistungsschaltung oder Relais zum Bestromen des Elektromagneten (17) oder -motors umfasst.

4. Kopfstütze nach Anspruch 3, **dadurch gekennzeichnet, dass** eine Schutzschaltung (33) für den Leistungstransistor (21) und/oder wenigstens ein Diagnosemodul (35) für den Leistungstransistor (21) und/oder für den Elektromagneten (17) oder -motor vorgesehen sind.

5. Kopfstütze nach Anspruch 3 oder 4, **dadurch gekennzeichnet, dass** der Leistungstransistor (21) und der Elektromagnet (17) miteinander zu einem einstückigen Bauteil verbunden sind.

6. Kopfstütze nach einem der Ansprüche 1 bis 5, **dadurch gekennzeichnet, dass** wenigstens eine Steuerleitung (25) und zwei Versorgungsleitungen (23) in der Kopfstütze (1) geführt sind, welche insbesondere an die Aktuatorbox (41) angeschlossen sind.

7. Kopfstütze nach Anspruch 6, **dadurch gekennzeichnet, dass** die Steuerleitung (25) eine gegenüber den Versorgungsleitungen geringere Leistung überträgt.

8. Kopfstütze nach Anspruch 6 oder 7, **dadurch gekennzeichnet, dass** die Steuerleitung (25) an einen zur Ansteuerung eines Airbags verwendbaren Ausgang des außerhalb der Kopfstütze (1) angeordneten Steuergerätes (C) angeschlossen ist.

9. Kopfstütze nach einem der Ansprüche 1 bis 8, **dadurch gekennzeichnet, dass** als Antrieb (15) eine Feder vorgesehen ist, welche von einer beweglichen Klinke gehalten wird, die insbesondere in der Aktuatorbox (41) enthalten ist und von einem Permanentmagneten gehalten wird, dessen Magnetfeld demjenigen des bestromten Elektromagneten (17) entgegengesetzt ist.

10. Kopfstütze nach einem der Ansprüche 1 bis 9, **dadurch gekennzeichnet, dass** die Aktuatorbox (41) als prüffähige Einheit mit einem nahezu geschlossenen Gehäuse versehen und/oder am Träger (9) angebracht ist.

11. Kraftfahrzeug mit einem Fahrzeugsitz (3), welcher eine Lehne (5) mit einer Kopfstütze (1) nach einem der Ansprüche 1 bis 10 aufweist, und einem Steuergerät (C) zum Ansteuern der Aktuatorbox (41).

## Claims

1. A headrest for a vehicle seat, in particular a motor vehicle seat, having a carrier (9), an impact element (11) that can be extended relative to the carrier (9) in the event of a crash, a drive means (15) for extending the impact element (11) and components for holding and releasing the drive means (15), comprising an electromagnet (17) or electric motor that can be controlled and energized by a control unit, **characterized in that** an actuator box (41) is arranged as an internal control unit inside the headrest (1) and comprises the components needed to energize the electromagnet (17) or the electric motor, and it is also connected for controlling purposes to an external control unit (C) that is arranged outside the headrest (1).

2. A headrest according to Claim 1, **characterized in that** the actuator box (41) is provided as a mechanical and electrical control unit which also comprises the electromagnet (17) or electric motor and the other components needed to hold and release the drive means (15).

3. A headrest according to Claim 1 or 2, **characterized in that** the actuator box (41) comprises a power transistor (21) or other power circuit or relay connected in series with the electromagnet (17) or electric motor to energize the electromagnet (17) or the electric motor.

4. A headrest according to Claim 3, **characterized in that** a protective circuit (33) is provided for the power transistor (21) and/or at least one diagnostic module (35) is provided for the power transistor (21) and/or for the electromagnet (17) or the electric motor.

5. A headrest according to Claim 3 or 4, **characterized in that** the power transistor (21) and the electromagnet (17) are connected with each other to form a one-piece component.

6. A headrest according to any of Claims 1 to 5, **characterized in that** at least one control wire (25) and two power supply wires (23) are located in the headrest (1) and are connected in particular to the actuator box (41).

7. A headrest according to Claim 6, **characterized in that** the control wire (25) carries less power than the supply wires.

8. A headrest according to Claim 6 or 7, **characterized in that** the control wire (25) is connected to an output of the control unit (C) that is arranged outside the headrest (1) and said output can also be used to control an airbag.

9. A headrest according to any of Claims 1 to 8, **characterized in that** a spring is provided as the drive means (15), said spring being held by a moveable pawl that is in particular contained in the actuator box (41) and is held by a permanent magnet whose magnetic field is opposed to that of the energized electromagnet (17).

10. A headrest according to any of Claims 1 to 9, **characterized in that** the actuator box (41) is a testable unit and is provided with an almost closed housing and/or is mounted on the carrier (9).

11. A motor vehicle having a vehicle seat (3) possessing a backrest (5) with a headrest (1) according to one of the Claims 1 to 10, and having a control unit (C) to control the actuator box (41).

## Revendications

1. - Appui-tête pour un siège de véhicule, en particulier un siège de véhicule automobile, comportant un support (9), un élément de rebondissement (11) apte à sortir en cas d'accident relativement au support (9), un organe d'entraînement (15) pour la sortie de l'élément de rebondissement (11) et des composants pour l'arrêt et le déclenchement de l'organe d'entraînement (15), lesquelles comprennent un électro-aimant (17) ou un électromoteur apte à être commandé et alimenté en courant par un appareil de commande, **caractérisé par le fait qu'**à l'intérieur de l'appui-tête (1), est disposée une boîte d'actionnement (41) comme appareil de commande interne, laquelle comprend les composants pour l'alimentation en courant de l'électro-aimant (17) ou de l'électromoteur et laquelle est reliée avec un appareil de commande externe (C) disposé à l'extérieur de l'appui-tête (1) pour la commande.

2. - Appui-tête selon la revendication 1, **caractérisé par le fait que** la boîte d'actionnement (41) est prévue comme appareil de commande mécanique et électrique, lequel comprend également l'électro-aimant (17) ou l'électromoteur et les autres composants pour l'arrêt et le déclenchement de l'organe d'entraînement (15).

3. - Appui-tête selon l'une des revendications 1 ou 2, **caractérisé par le fait que** la boîte d'actionnement (41) comprend un transistor de puissance (21) monté en série avec l'électro-aimant (17) ou l'électromoteur ou un autre circuit de puissance ou relais pour l'alimentation en courant de l'électro-aimant (17) ou de l'électromoteur.

4. - Appui-tête selon la revendication 3, **caractérisé par le fait qu'**un circuit protecteur (33) est prévu pour le transistor de puissance (21) et/ou au moins un module de diagnostic (35), pour le transistor de puissance (21) et/ou pour l'électro-aimant (17) ou l'électromoteur.

5. - Appui-tête selon l'une des revendications 3 ou 4, **caractérisé par le fait que** le transistor de puissance (21) et l'électro-aimant (17) sont reliés l'un à l'autre en un composant d'une seule pièce.

6. - Appui-tête selon l'une des revendications 1 à 5, **caractérisé par le fait qu'**au moins une ligne pilote (25) et deux lignes d'alimentation (23) sont guidées dans l'appui-tête (1), lesquelles en particulier sont raccordées à la boîte d'actionnement (41).

7. - Appui-tête selon la revendication 6, **caractérisé par le fait que** la ligne pilote (25) transporte une puissance plus faible vis-à-vis des lignes d'alimentation.

8. - Appui-tête selon l'une des revendications 6 ou 7, **caractérisé par le fait que** la ligne pilote (25) est raccordée à une sortie, utilisable pour la commande d'un air-bag, de l'appareil de commande (C) disposé à l'extérieur de l'appui-tête (1).

9. - Appui-tête selon l'une des revendications 1 à 8, **caractérisé par le fait que**, comme organe d'entraînement (15) est prévu un ressort, lequel est retenu par un cliquet mobile, qui est contenu en particulier dans la boîte d'actionnement (41) et est retenu par un aimant permanent, dont le champ magnétique est opposé à celui de l'électro-aimant (17) alimenté en courant.

10. - Appui-tête selon l'une des revendications 1 à 9, **caractérisé par le fait que** la boite d'actionnement (41), comme unité apte à être testée, est dotée d'un boîtier presque fermé et/ou est rapportée sur le support (9).

11. - Véhicule automobile comportant un siège de véhicule (3), lequel présente un dossier (5) avec un appui-tête (1) tel que défini à l'une des revendications 1 à 10, et un appareil de commande (C) pour la commande du boîtier d'actionnement (41).
